# EUROPEAN PATENT APPLICATION

(11) **EP 4 491 033 A1**
(43) Date of publication of application: **15.01.2025**
(21) Application number: 23766519.5
(22) Date of filing: 20.02.2023
(51) Int. Cl.: A23L 2/52, A23L 2/00, A23L 2/38, C12C 5/02, C12C 11/11, C12C 12/04, C12G 3/04, C12H 3/00

(54) **BEER-TASTE LOW-ALCOHOL BEVERAGE AND METHOD FOR PRODUCTION THEREOF**

(30) Priority: 11.03.2022 JP 2022038391; 07.07.2022 JP 2022109859
(71) Applicant: Asahi Group Holdings, Ltd., Tokyo 130-8602 (JP)
(72) Inventor: NAKAYAMA, Wataru, Moriya-shi, Ibaraki 302-0106 (JP)
(74) Representative: Müller-Boré & Partner Patentanwälte PartG mbB
(86) International application number: PCT/JP2023/005986
(87) International publication number: WO 2023/171340

(57) **Abstract**

A problem to be solved of the invention is to provide an alcohol-removed fermented beer-taste beverage which has improved alcoholic feeling and reduced fermented soybeans odor. Means for solving the problem is a low-alcohol beer-taste beverage containing at least one 2-acetyltetrahydropyridine compound selected from the group consisting of 2-acetyltetrahydropyridine and, 2-acetyl-1,4,5,6-tetrahydropyridine its tautomer, in an amount of more than 2 ppb and less than 10 ppb, and containing components derived from an alcohol-removed wort-fermented liquid.

## Description

### [Technical Field]

The present invention relates to a low-alcohol beer-taste beverage, and in particular to a low-alcohol beer-taste beverage having an alcohol concentration of less than 1% v/v. "Beer-taste" refers to taste and aroma that are reminiscent of beer. "Beer" refers to a beverage obtained by fermenting with yeast using malt, hops, water, and the like as raw materials.

### [Background Art]

There are known low-alcohol beer-taste beverages obtained by subjecting fermented beer to an alcohol-removal treatment to remove alcohol components. The alcohol-removed fermented beer-taste beverages show bland flavor, and are unsatisfactory for drinking in terms of both aroma and taste. This is because when alcohol components are removed, the sweetness inherent in alcohol itself is lost, and the aroma specific to beer is lost.

Patent Document 1 discloses a carbonated beverage having beer-like flavor, in which a malt extract is added and flavored to an alcohol-removed fermented beer-taste beverage, and the saccharide composition is adjusted to provide improved sweetness balance, drinking feeling and sharpness.

Patent Document 2 discloses a flavor improving agent for beer-like beverages, which contains at least one 2-acetyltetrahydropyridine compound selected from the group consisting of 2-acetyl-3,4,5,6-tetrahydropyridine and 2-acetyl-1,4,5,6-tetrahydropyridine that is its tautomer. Patent Document 2 lists a fermented beer-like low-alcohol beverage as an example of a subject for which the flavor is to be improved.

According to the description of Patent Document 2, 2-acetyltetrahydropyridine compounds are compounds that have popcorn-like or bread-like aroma produced when malt is heated. Furthermore, the above-described aroma corresponds to "off-flavor", or strange odor, which is perceived in deteriorated beer due to thermal loading. On the other hand, when a 2-acetyltetrahydropyridine compound is added to a beer-like beverage, the grain aroma is enhanced, which improves flavor balance of the beer-like beverage.

### [Prior Art Documents]

### [Patent Documents]

[Patent Document 1] JP 2003-250503 A
[Patent Document 2] JP 2021-27828 A

### [Summary of Invention]

### [Problems to be Solved by Invention]

In an alcohol-removed fermented beer-taste beverage, the problems of weak alcoholic feeling due to removal of alcohol and volatile aroma components, and noticeable fermented soybeans-like odor (hereinafter referred to as fermented soybeans odor) produced when grains are fermented and heated are revealed.

The present invention solves the above problems, and an object thereof is to provide an alcohol-removed fermented beer-taste beverage which has enhanced alcoholic feeling and reduced fermented soybeans odor.

### [Means for Solving Problems]

The present invention provides a low-alcohol beer-taste beverage containing at least one 2-acetyltetrahydropyridine compound selected from the group consisting of 2-acetyl-3,4,5,6-tetrahydropyridine and 2-acetyl-1,4,5,6-tetrahydropyridine that is its tautomer in an amount of more than 2 ppb and less than 10 ppb, and containing components derived from an alcohol-removed wort-fermented liquid.

In one embodiment, the low-alcohol beer-taste beverage has a bitterness value of 10 to 50 BU.

In one embodiment, the low-alcohol beer-taste beverage has an apparent extract concentration of 1 to 10% w/v.

In one embodiment, the wort-fermented liquid is a wort bottom-fermented liquid.

In one embodiment, the wort-fermented liquid has a malt use ratio of 50% w/w or more.

In one embodiment, the low-alcohol beer-taste beverage comprises an alcohol-removed wort-fermented liquid.

In one embodiment, the low-alcohol beer-taste beverage does not contain the 2-acetyltetrahydropyridine compound added as a flavoring agent.

Also, the present invention provides a method for producing a low-alcohol beer-taste beverage, comprising:
including components derived from an alcohol-removed wort-fermented liquid in the low-alcohol beer-taste beverage; and
adjusting the concentration of at least one 2-acetyltetrahydropyridine compound selected from the group consisting of 2-acetyl-3,4,5,6-tetrahydropyridine and 2-acetyl-1,4,5,6-tetrahydropyridine that is its tautomer, contained in the low-alcohol beer-taste beverage, to more than 2 ppb and less than 10 ppb.

Also, the present invention provides a method for enhancing alcoholic feeling and reducing fermented soybeans odor in a low-alcohol beer-taste beverage, comprising: including components derived from an alcohol-removed wort-fermented liquid in the low-alcohol beer-taste beverage; and adjusting the concentration of at least one 2-acetyltetrahydropyridine compound selected from the group consisting of 2-acetyl-3,4,5,6-tetrahydropyridine and 2-acetyl-1,4,5,6-tetrahydropyridine that is its tautomer, contained in the low-alcohol beer-taste beverage, to more than 2 ppb and less than 10 ppb.

### [Effect of Invention]

According to the present invention, it is possible to provide an alcohol-removed fermented beer-taste beverage which has enhanced alcoholic feeling and reduced fermented soybeans odor.

### [Embodiments for Conducting Invention]

In the present specification, the term "process" includes not only an independent process, but also a process that cannot be clearly distinguished from other processes, as long as the intended purpose of the process is achieved. Furthermore, when a number of substances corresponding to respective components are present in a composition, the content of each component in the composition means the total amount of those substances present in the composition, unless otherwise specified. Furthermore, upper and lower limits of numerical ranges in this specification may be optionally selected and combined. Hereinafter, embodiments of the present invention will be described in detail. However, the embodiments shown below are merely examples of low-alcohol beer-taste beverages and methods for producing the same in order to embody the technical idea of the present invention, and the present invention is not limited to the low-alcohol beer-taste beverages and methods for producing the same described below.

### <Low-Alcohol Beer-taste Beverages>

A "low-alcohol beer-taste beverage" refers to a beer-taste beverage with a lower alcohol concentration than regular beer-taste beverages. A low-alcohol beer-taste beverage has an alcohol concentration of 3% v/v or less, preferably 2% v/v or less, and more preferably less than 1% v/v. The meaning of "low-alcohol beer-taste beverage" also includes non-alcohol beer-taste beverages that contain substantially no alcohol (e.g., alcohol concentration of 0.00% v/v). The wording "alcohol" means ethanol.

### <Components Derived from Alcohol-Removed Wort-Fermented Liquid>

A low-alcohol beer-taste beverage of the present invention contains components derived from an alcohol-removed wort-fermented liquid. The alcohol-removed wort-fermented liquid is a liquid obtained by removing alcohol from a fermented liquid obtained by fermenting wort with beer yeast, i.e., a wort-fermented liquid. The wort referred to in the present invention means wort used in production of regular beer, and includes components derived from malt. The malt-derived components refer to components contained in malt. Components derived from an alcohol-removed wort-fermented liquid refers to components contained in the alcohol-removed wort fermented liquid. The low-alcohol beer-taste beverage may contain the alcohol-removed wort-fermented liquid.

Methods for removing alcohol from a wort-fermented liquid include heating the wort-fermented liquid or heating it under reduced pressure to vaporize alcohol, removing alcohol by a reverse osmosis membrane and the like. In an alcohol-removed wort-fermented liquid, alcohol may be removed to such an extent that alcohol content of low-alcohol beer-taste beverage as the final product is at the desired concentration.

By including components derived from an alcohol-removed wort-fermented liquid in a low-alcohol beer-taste beverage, beer-like complex taste, robust feeling of drinking, and body feeling are provided to the low-alcohol beer-taste beverage.

In an alcohol-removed wort-fermented liquid, alcohol and volatile aroma components have been removed. Consequently, the alcoholic feeling perceived as a flavor upon drinking becomes weaker compared with that of the wort-fermented liquid. In addition, in an alcohol-removed wort-fermented liquid, grains are fermented, and then heated to remove alcohol, resulting in stronger fermented soybeans odor derived from grains, compared with that of the wort-fermented liquid.

The amount and concentration of components derived from an alcohol-removed wort-fermented liquid contained in the low-alcohol beer-taste beverage, are not particularly limited and may be set as appropriate depending on desired flavor.

The wort-fermented liquid may be either a wort top-fermented liquid or a wort bottom-fermented liquid, but from the viewpoint of making aftertaste refreshing, the wort bottom-fermented liquid is preferred. The wort top-fermented liquid refers to a wort-fermented liquid in which wort is inoculated with top-fermenting yeast and fermented for several days under normal fermentation conditions, e.g., at 15 to 25°C. The wort bottom-fermented liquid refers to a wort-fermented liquid in which wort is inoculated with bottom fermenting yeast and fermented under normal fermentation conditions, e.g., at around 10°C for about one week.

The wort-fermented liquid has a malt use ratio at a predetermined concentration. The malt use ratio is the ratio of the weight of malt to the weight of a starchy raw material. The malt use ratio of the wort-fermented liquid is, for example, 50% w/w or more. If the malt use ratio of wort-fermented liquid contained in the low-alcohol beer-taste beverage is less than 50% w/w, the resulting low-alcohol beer-taste beverage may have insufficient alcoholic feeling, and may result in strong fermented soybeans odor. The malt use ratio of wort-fermented liquid contained in the low-alcohol beer-taste beverage is preferably 55% w/w or more, more preferably 60% w/w or more, and even more preferably 60 to 75% w/w.

The apparent extract concentration of low-alcohol beer-taste beverage is adjusted to 1 to 10% w/w. If the apparent extract concentration of low-alcohol beer-taste beverage is less than 1% w/w, a beer-like complex taste and barley-like sweetness of low-alcohol beer-taste beverage may be insufficient. If the apparent extract concentration of low-alcohol beer-taste beverage exceeds 10% w/w, the low-alcohol beer-taste beverage may have heavy aftertaste. The apparent extract concentration of low-alcohol beer-taste beverage is preferably 3 to 9.5% w/w, more preferably 5 to 9% w/w, and even more preferably 6 to 8.5% w/w.

The apparent extract concentration of low-alcohol beer-taste beverages may be measured, for example, by the method described in Beer Brewers Association Edit.: BCOJ Beer Analysis Method (2004). Low-alcohol beer-taste beverages may be produced, for example, by the method for producing a low-alcohol beer-taste beverage described below.

### <2-Acetyl Tetrahydropyridine Compounds>

2-acetyltetrahydropyridine compounds contained in the low-alcohol beer-taste beverage of the present invention, namely 2-acetyl-3,4,5,6-tetrahydropyridine and 2-acetyl-1,4,5,6-tetrahydropyridine are aroma components. Therefore, the use of these does not significantly change the taste quality of low-alcohol beer-taste beverages. 2-acetyltetrahydropyridine compounds have a relatively high boiling point of 200 to 250°C and do not volatilize and their concentration remains unchanged during the process of removing alcohol from a wort-fermented liquid.

2-Acetyl-3,4,5,6-tetrahydropyridine and 2-acetyl-1,4,5,6-tetrahydropyridine are tautomer. Therefore, when 2-acetyl-3,4,5,6-tetrahydropyridine is added to a low-alcohol beer-taste beverage, the low-alcohol beer-taste beverage generally contains both 2-acetyl-3,4,5,6-tetrahydropyridine and 2-acetyl-1,4,5,6-tetrahydropyridine. Their presence ratio is determined depending on the ambient pH environment and the other factors.

In the present specification, the above-described 2-acetyltetrahydropyridine compounds are sometimes referred to as "ATHP". ATHP is a compound that is produced when malt is heated in the process of producing a wort-fermented liquid. ATHP may be produced by adjusting production conditions of the wort-fermented liquid, or those which are commercially available as flavoring agents may be used.

By including ATHP in a low-alcohol beer-taste beverage containing components derived from an alcohol-removed wort-fermented liquid, alcoholic feeling is enhanced and fermented soybeans odor is reduced in the low-alcohol beer-taste beverage. ATHP may be included in the low-alcohol beer-taste beverage, for example, by mixing an alcohol-removed wort-fermented liquid containing ATHP, or by adding ATHP alone or flavoring agents containing ATHP.

ATHP is included in the low-alcohol beer-taste beverage in an amount of that the ATHP concentration in the low alcohol beer-taste beverage is more than 2 ppb and less than 12 ppb. When the ATHP concentration of low-alcohol beer-taste beverage is less than 2 ppb, alcoholic feeling is poor, and fermented soybeans odor is increased. When it exceeds 12 ppb, grain aroma is increased, and flavor balance may be deteriolated. The ATHP concentration in low-alcohol beer-taste beverages is preferably 2.5 to 10 ppb, more preferably 5 to 9.5 ppb, and even more preferably 6 to 9 ppb.

### <Bitterness Value>

The low-alcohol beer-taste beverage preferably has a predetermined bitterness value (unit: BU). When the low-alcohol beer-taste beverage has the predetermined bitterness value, aftertaste of the low-alcohol beer-taste beverage becomes more refreshing. The bitterness value is an index of bitterness given by a group of substances derived from hops, composed mainly of isohumulone.

The bitterness value of low-alcohol beer-taste beverage is preferably between 10 and 50 BU. If the bitterness value of low-alcohol beer-taste beverage is less than 10 BU, the low-alcohol beer-taste beverage may have heavy aftertaste. If the bitterness value of low-alcohol beer-taste beverage exceeds 50 BU, bitterness of the low-alcohol beer-taste beverage stands out, and beer-like complex taste of the low-alcohol beer-taste beverage may become insufficient. The bitterness value of low-alcohol beer-taste beverage is more preferably 10 to 45 BU, even more preferably 15 to 40 BU, and particularly preferably 20 to 35 BU.

The bitterness value may be measured, for example, by the method described in Beer Brewers Association Edit.: BCOJ Beer Analysis Methods, 8.15 (2004).

The bitterness value of low-alcohol beer-taste beverage may be adjusted by adjusting variety of raw materials containing bitter substances (e.g., hops and the like), their amount used, and timing of addition of such raw materials, or by adding bitter substances as appropriate. Isolated iso-alpha acids may be used as the bitter substances. Iso-alpha acids are contained in hops, and hops or hop extract may also be used. Hops or hop extract refers to hop leaves, their ground products, extraction liquids obtained by extracting them with water or hot water, concentrates and dried products of the extract liquids.

### <Method for Producing Low-Alcohol Beer-taste Beverage>

A method for producing a low-alcohol beer-taste beverage may include: including components derived from an alcohol-removed wort-fermented liquid in the low-alcohol beer-taste beverage; and adjusting ATHP contained in the low-alcohol beer-taste beverage to a predetermined concentration. For other than that steps, the conventional method for producing low-alcohol beer-taste beverages may be utilized.

The ATHP concentration in low-alcohol beer-taste beverage may be adjusted to a predetermined level, for example, by employing an alcohol-removed wort-fermented liquid, in which a predetermined amount of ATHP has been produced by adjusting the production conditions, as a low-alcohol beer-taste beverage; by mixing the alcohol-removed wort-fermented liquid with low-alcohol beer-taste beverages; or adding ATHP alone or flavoring agents containing ATHP to low-alcohol beer-taste beverages.

For example, the ATHP concentration of low-alcohol beer-taste beverage may be adjusted to a desired level by mixing an alcohol-removed wort-fermented liquid, in which ATHP at one concentration has been produced by adjusting the production conditions, with an alcohol-removed wort-fermented liquid, in which ATHP at another concentration has been produced by adjusting the production conditions, in a predetermined mixing ratio.

The method for producing a low-alcohol beer-taste beverage may also include the bitterness value adjusting step or the apparent extract concentration adjusting step.

The bitterness value adjusting step may include adjusting the bitterness value of the low-alcohol beer-taste beverage to the range described above.

The apparent extract concentration adjustment step may include adjusting the apparent extract concentration of the low-alcohol beer-taste beverage to the range described above.

The method for producing a low-alcohol beer-taste beverage may further include the steps of: adding caramel coloring and the like, boiling, pH adjustment, filtration, flavor adjustment, dissolving carbon dioxide gas and the like, utilizing publicly known devices and the like.

The method for producing a low-alcohol beer-taste beverage may further include the step of adding dietary fiber, soy peptides, carbonic acid, extracts, flavoring agents, sour agents, sweeteners, bittering agents, colorings, antioxidants, pH adjusters, various nutritional components and the like, as necessary.

The present invention is further specifically described by the following examples, but the present invention is not limited to these.

### [Examples]

### <Production Example 1>

### Production of High-ATHP Alcohol-Removed Wort-Fermented Liquid

### (1) Production of Wort-Fermented Liquid

Crushed malt, enzymes, and warm water were charged into a preparation tank, and after performing protein rest at around 55°C, transglucosidase was added and saccharification was performed at temperatures ranging from 60°C to 76°C. The saccharified liquid was filtered through a lauter tun that was a filtration tank, and then transferred to a boiling kettle. Hops were added, and the mixture was boiled for 60 minutes. After boiling, warm water was added for evaporation, and after removing hot trub in a whirlpool tank, the mixture was cooled to 10°C to obtain cold wort. Beer yeast was added to this wort and fermented at around 10°C for 7 days, after which the beer yeast was removed. It was transferred to another tank, aged for 7 days, and then cooled to around - 1°C and stabilized for 14 days. Deaerated water was subsequently added for dilution, and the mixture was filtered through diatomaceous earth to obtain a wort-fermented liquid. The resulting wort-fermented liquid served as Fermented Liquid 1.

### (2) Production of Alcohol-Removed Wort-Fermented Liquid

Fermented Liquid 1 was sprayed into a degassing tank under reduced pressure near 90 mbar to remove carbon dioxide gas, and then heated to near 50°C using a plate cooler. Then, it was brought into contact with water vapor heated to around 50°C in a reduced-pressure column at around 90 mbar, and volatile components were adsorbed to water vapor to remove the alcohol and volatile components to prepare an alcohol-removed wort-fermented liquid with less than 1% alcohol. The resulting alcohol-removed wort-fermented liquid served as Distil-liquid 1.

### (3) Analysis of Distil-liquid 1

### [Quantitative Determination of ATHP]

To 20 g of Distil-liquid 1, 50 µL of an internal standard solution (4 µg/mL ATHP stable isotope), 200 µL of formic acid and 10 mL of distilled water were added, and the mixture was loaded onto OASIS MCX 500 mg/6 mL (Waters Corporation).

The column was washed with 5 mL of 1% formic acid water, followed by elution with 5 mL of 2% ammonia-methanol. The eluate was diluted 2-fold with distilled water, and analyzed by LC/MS/MS.

Using LC/MS/MS (5500 QTRAP manufactured by AB-SCIEX Corporation), the separation was conducted using as a column ACQUITY UPLC BEH C18 1.7 µm, 2.1 x 100 mm (manufactured by Waters Corporation). The mobile phase conditions were as follows: Liquid A: 10 mM ammonium hydrogen carbonate, Liquid B: acetonitrile, (B%, t) : (10%, 1 min), (50%, 6 min). The transition of ATHP was analyzed at 126 -> 84 (collision energy: 23 V). Quantitative determination was conducted using a calibration curve prepared by adding a standard substance. The analysis results are shown in Table 1.

**[Table 1]**

| Table 1. ATHP Concentration of Distil-liquid 1 | |
|---|---|
| Component Name | Concentration (PPb) |
| ATHP | 10 |

### [Quantitative Determination of Organic Acid Components]

Quantitative determination of organic acid components contained in Distil-liquid 1 was conducted according to a conventional method. The analysis results are shown in Table 2.

**[Table 2]**

| Table 2. Organic Acid Component Concentration of Distil-liquid 1 | |
|---|---|
| Component Name | Concentration (ppm) |
| Phosphoric Acid | 411.2 |
| Citric Acid | 157.8 |
| Pyruvic Acid | 92.5 |
| Malic Acid | 93.3 |
| Succinic Acid | 63.2 |
| Lactic Acid | 114.6 |
| Formic Acid | 0.0 |
| Acetic Acid | 48.5 |
| Pyroglutamic Acid | 207.9 |

### [Determination of Apparent Extract Concentration]

The apparent extract concentration of Distil-liquid 1 was 10.0% w/w. The apparent extract refers to the extract of the fermented beverage, expressed as the concentration of sucrose (usually % by mass) in an aqueous sucrose solution having the same specific gravity at 20°C. Since it contains alcohol, the apparent extract is different from the extract in the original sense (soluble evaporation residue = genuine extract).

### <Production Example 2>

### Production of Low-ATHP Alcohol-Removed Wort-Fermented Liquid

Crushed malt, water, and cornstarch were charged into a preparation kettle, gelatinization and liquefication were performed at 70°C at 100°C, respectively. Next, crushed malt, enzymes, and warm water were charged into a preparation tank. After performing protein rest at around 55°C, the liquid was transferred from the preparation kettle to the preparation tank, and saccharification was performed at temperatures ranging from 60°C to 76°C. The saccharified liquid was filtered through a lauter tun that was a filtration tank, and then transferred to a boiling kettle. Hops were added, and the mixture was boiled for 60 minutes. After boiling, warm water was added thereto to adjust the concentration of ATHP. After removing hot trub in a whirlpool tank, the mixture was cooled to 10°C to obtain cold wort. Beer yeast was added to this wort and fermented at around 10°C for 7 days, after which the beer yeast was removed. It was transferred to another tank, aged for 7 days, and then cooled to around -1°C and stabilized for 14 days. Deaerated water was then added for dilution, and the mixture was filtered through diatomaceous earth to obtain a wort-fermented liquid. The resulting wort-fermented liquid served as Fermented Liquid 2.

An alcohol-removed wort-fermented liquid with less than 1% alcohol was prepared by removing the alcohol and volatile components contained in Fermented Liquid 2 in the same manner as in Production Example 1, except that Fermented Liquid 2 was used in place of Fermented Liquid 1. Organic acids were added to the resulting alcohol-removed wort-fermented liquid so that the organic acid concentration was equal to that of Fermented Liquid 1, and the liquid served as Distil-liquid 2. The apparent extract concentration of Distil-liquid 2 was 1.0% w/w.

Quantitative determination of ATHP and organic acid components contained in Distil-liquid 2 was conducted in the same manner as in Production Example 1, except that Distil-liquid 2 was used in pcomplace of Distil-liquid 1. The results are shown in Tables 3 and 4, respectively.

**[Table 3]**

| Table 3. ATPH Concentration of Distil-liquid 2 | |
|---|---|
| Component Name | Concentration (PPb) |
| ATHP | 0.5 |

**[Table 4]**

| Table 4. Organic Acid Component Concentration of Distil-liquid 2 | |
|---|---|
| Component Name | Concentration (ppm) |
| Phosphoric Acid | 512.4 |
| Citric Acid | 183.2 |
| Pyruvic Acid | 116.6 |
| Malic Acid | 91.4 |
| Succinic Acid | 51.5 |
| Lactic Acid | 130.2 |
| Formic Acid | 0.0 |
| Acetic Acid | 91.4 |
| Pyroglutamic Acid | 214.3 |

Comparing the analysis results of Distil-liquid 1 and Distil-liquid 2, Distil-liquid 1 had a higher ATHP concentration than Distil-liquid 2, and the concentration of organic acid components was equal to that of Distil-liquid 2.

### <Example 1>

### Production of Low-Alcohol Beer-taste Beverages by Mixing Distil-liquids and Sensory Evaluation

Five low-alcohol beer-taste beverages with varying concentrations of ATHP were produced by mixing Distil-liquid 1 and Distil-liquid 2 at predetermined mixing ratios. These served as Samples 1 to 5.

Samples 1 to 5 were then subjected to sensory evaluation. The testers were six trained panelists. The evaluation items were as follows: intensity of sourness, intensity of fermented soybeans odor, intensity of alcoholic feeling, intensity of complex taste derived from brewing, and intensity of grain aroma.

For sensory tests, the testers tasted the samples and scored the degree under which each evaluation item fell on a 5-point scale. The score for sample 1 was 3, 4 for slightly strongly perceived, 5 for strongly perceived, 2 for slightly weakly perceived, and 1 for weakly perceived, and finally the average of the six testers' scores was calculated.

If the average scores for the intensity of sourness and intensity of fermented soybeans odor were 2.5 or less, and the average scores for the intensity of alcoholic feeling, intensity of complex taste derived from brewing, and intensity of grain aroma were 3.5 or more, the beer-like flavor was recognized, and the overall evaluation was rated as "B: Good". If the average scores for the intensity of sourness and intensity of fermented soybeans odor were 2.0 or less, and the average scores for the intensity of alcoholic feeling, intensity of complex taste derived from brewing, and intensity of grain aroma were 4.0 or more, the beer-like flavor with thickness was recognized and the overall evaluation was rated as "A: Excellent. If the criteria for the above scores were not met, the beer-like flavor was not recognized, and the overall evaluation was rated as "C: inferior. The evaluation results are shown in Table 5.

**[Table 5]**

| Table 5. Evaluation of Low-Alcohol Beer-taste Beverages Mixed with Distil-liquids | | | | | | |
|---|---|---|---|---|---|---|
| | | Sample 1 | Sample 2 | Sample 3 | Sample 4 | Sample 5 |
| Mixing Ratio | Distil-liquid 1 (%) | 0 | 25 | 50 | 75 | 100 |
| | Distil-liquid 2 (%) | 100 | 75 | 50 | 25 | 0 |
| | ATHP Concentration (PPb) | 0.5 | 2.5 | 5.0 | 7.5 | 10 |
| | Apparent Extract Concentration (% w/w) | 1.0 | 3.2 | 5.5 | 7.7 | 10 |
| Sensory Evaluation | Intensity of Sourness | 3.00 | 2.33 | 1.67 | 1.33 | 1.00 |
| | Intensity of Fermented soybeans Odor | 3.00 | 2.50 | 1.83 | 1.67 | 1.00 |
| | Intensity of Alcoholic Feeling | 3.00 | 3.50 | 4.17 | 4.83 | 5.00 |
| | Intensity of Complex Taste Derived from Brewing | 3.00 | 3.50 | 4.17 | 4.67 | 5.00 |
| | Intensity of Grain Aroma | 3.00 | 3.50 | 4.17 | 4.83 | 5.00 |
| | Overall Evaluation | - | B | A | A | A |
| | Comments | Watery, Flat | Light, Sharpness, | Grain, Sharpness, Light | Grain, Richness, Sharpness, Light | Grain, Richness, Sharpness, Mild |

### <Example 2>

### Production of Low-Alcohol Beer-taste Beverages by Adding ATHP, and Sensory Evaluation

A flavoring agent containing ATHP (manufactured by San-Ei Gen F.F.I., Inc.) was prepared. By adding this to Distil-liquid 2, six low-alcohol beer-taste beverages with varying concentrations of ATHP were produced. These served as samples 6 to 11.

Sensory evaluation was performed in the same manner as in Example 1, except that samples 6 to 11 were used in place of samples 1 to 5. The evaluation results are shown in Table 6.

**[Table 6]**

| Table 6. Evaluation of ATHP-Added Low Alcohol Beer-taste Beverages | | | | | | | |
|---|---|---|---|---|---|---|---|
| | | Sample 6 | Sample 7 | Sample 8 | Sample 9 | Sample 10 | Sample 11 |
| | ATHP Concentration (PPb) | 0.5 | 2.5 | 5.0 | 7.5 | 10 | 12.5 |
| | Apparent Extract Concentration (% w/w) | 1.0 | 1.0 | 1.0 | 1.0 | 1.0 | 1.0 |
| Sensory Evaluation | Intensity of Sourness | 3.00 | 2.33 | 1.67 | 1.33 | 1.00 | 1.00 |
| | Intensity of Fermented soybeans Odor | 3.00 | 2.50 | 1.83 | 1.67 | 1.00 | 1.00 |
| | Intensity of Alcoholic Feeling | 3.00 | 3.50 | 4.17 | 4.83 | 5.00 | 5.00 |
| | Intensity of Complex Taste Derived From Brewing | 3.00 | 3.50 | 4.17 | 4.67 | 5.00 | 5.00 |
| | Intensity of Grain Feeling | 3.00 | 3.50 | 4.17 | 4.83 | 5.00 | 5.00 |
| | Overall Evaluation | C | B | A | A | A | C |
| | Comments | Watery, Flat | Light, Sharpness | Grain, Sharpness, Light | Grain, Richness, Sharpness, Light | Grain, Richness, Sharpness, Mild | Grain Aroma Strongly Remains, Unbalanced |

## Claims

1. A low-alcohol beer-taste beverage containing at least one 2-acetyltetrahydropyridine compound selected from the group consisting of 2-acetyl-3,4,5,6-tetrahydropyridine and 2-acetyl-1,4,5,6-tetrahydropyridine that is its tautomer in an amount of more than 2 ppb and less than 10 ppb, and containing components derived from an alcohol-removed wort-fermented liquid.

2. The low-alcohol beer-taste beverage according to claim 1, having a bitterness value of 10 to 50 BU.

3. The low-alcohol beer-taste beverage according to claim 1 or 2, having an apparent extract concentration of 1 to 10% w/w.

4. The low-alcohol beer-taste beverage according to any one of claims 1 to 3, wherein the wort-fermented liquid is a wort bottom-fermented liquid.

5. The low-alcohol beer-taste beverage according to any one of claims 1 to 4, wherein the wort-fermented liquid has a malt use ratio of 50% w/w or more.

6. The low-alcohol beer-taste beverage according to any one of claims 1 to 5, comprising an alcohol-removed wort-fermented liquid.

7. The low-alcohol beer-taste beverage according to any one of claims 1 to 6, not containing the 2-acetyltetrahydropyridine compound added as a flavoring agent.

8. A method for producing a low-alcohol beer-taste beverage, comprising: including components derived from an alcohol-removed wort-fermented liquid in the low-alcohol beer-taste beverage; and adjusting the concentration of at least one 2-acetyltetrahydropyridine compound selected from the group consisting of 2-acetyl-3,4,5,6-tetrahydropyridine and 2-acetyl-1,4,5,6-tetrahydropyridine that is its tautomer, contained in the low-alcohol beer-taste beverage, to more than 2 ppb and less than 10 ppb.

9. A method for enhancing alcoholic feeling and reducing fermented soybeans odor in a low-alcohol beer-taste beverage, comprising: including components derived from an alcohol-removed wort-fermented liquid in the low-alcohol beer-taste beverage; and adjusting the concentration of at least one 2-acetyltetrahydropyridine compound selected from the group consisting of 2-acetyl-3,4,5,6-tetrahydropyridine and 2-acetyl-1,4,5,6-tetrahydropyridine that is its tautomer, contained in the low-alcohol beer-taste beverage, to more than 2 ppb and less than 10 ppb.
